# EUROPEAN PATENT SPECIFICATION

(11) **EP 4 376 140 B1**
(45) Date of publication and mention of the grant of the patent: **02.12.2026**
(21) Application number: 22893087.1
(22) Date of filing: 28.10.2022
(51) Int. Cl.: H01M 10/04, H01M 50/533, H01M 10/0587, H01M 50/538

(54) **JELLY-ROLL WITH IMPROVED ELECTROLYTE IMPREGNATION PROPERTY, AND CYLINDRICAL BATTERY CELL, BATTERY PACK AND VEHICLE INCLUDING THE SAME**
JELLY-ROLL MIT VERBESSERTER ELEKTROLYTIMPRÄGNIERUNGSEIGENSCHAFT SOWIE ZYLINDRISCHE BATTERIEZELLE, BATTERIEPACK UND FAHRZEUG DAMIT
ROULÉ PRÉSENTANT UNE PROPRIÉTÉ D'IMPRÉGNATION PAR ÉLECTROLYTE AMÉLIORÉE, ET ÉLEMENT DE BATTERIE CYLINDRIQUE, BLOC BATTERIE ET VÉHICULE LE COMPRENANT

(30) Priority: 09.11.2021 KR 20210153452
(43) Date of publication of application: 29.05.2024
(73) Proprietor: LG Energy Solution, Ltd., Seoul 07335 (KR)
(72) Inventor: LEE, Yun-Ju, Daejeon 34122 (KR); RYU, Duk-Hyun, Daejeon 34122 (KR); LEE, Kwan-Hee, Daejeon 34122 (KR)
(74) Representative: Goddar, Heinz J.
(86) International application number: PCT/KR2022/016735
(87) International publication number: WO 2023/085665

(56) References cited:
- EP-A1- 4 095 965
- JP-A- 2008 243 672
- JP-A- 2009 117 290
- JP-B2- 4 401 634
- JP-B2- 4 655 657
- KR-B1- 100 964 490
- US-A1- 2013 216 879
- US-A1- 2019 348 719

## Description

### TECHNICAL FIELD

The present disclosure relates to a jelly-roll with an improved electrolyte impregnation property, and a cylindrical battery cell, a battery pack and a vehicle including the same.

### BACKGROUND ART

Secondary batteries that have ease of application according to product groups and have electrical characteristics such as high energy density are universally applied not only to portable devices, but also to electric vehicles (EVs) or hybrid electric vehicles (HEVs) driven by an electric drive source. These secondary batteries are attracting attention as a new energy source for improving eco-friendliness and energy efficiency because they not only have the primary advantage of dramatically reducing the use of fossil fuels, but also do not generate any by-products from the use of energy.

Types of secondary batteries currently widely used include lithium-ion batteries, lithium polymer batteries, nickel cadmium batteries, nickel hydrogen batteries, nickel zinc batteries, and the like. Such a unit secondary battery cell, that is, a unit battery cell, has an operating voltage of about 2.5 V to 4.5 V. Therefore, when a higher output voltage is required, a battery pack may be configured by connecting a plurality of battery cells in series. In addition, a plurality of battery cells may be connected in parallel to form a battery pack according to the charge/discharge capacity required for the battery pack. Accordingly, the number of battery cells included in the battery pack may be variously set according to a required output voltage and/or charge/discharge capacity.

On the other hand, in general, in a secondary battery, electrolyte may be impregnated in an electrode assembly, so that lithium ions can smoothly move to generate an electric current. At this time, the electrolyte impregnation property is a very important factor affecting the lifespan and capacity of the battery, and it is more advantageous as the electrolyte impregnation rate is higher.

Meanwhile, as the demand for cylindrical secondary batteries for electric vehicles has recently increased, the importance of developing cylindrical battery cells of middle and large sizes, rather than the existing size, has increased in order to improve energy density. However, as the size of the cylindrical battery cell increases, the electrolyte impregnation property may be deteriorated in the central part of the electrode of the jelly-roll, and thus the performance of the battery may be deteriorated. That is, the structure of the conventional electrode assembly has limitations in improving the electrolyte impregnation properties of cylindrical battery cells of middle and large sizes.

Therefore, it is required to find a way to improve the electrolyte impregnation property of the electrode assembly of the cylindrical battery cell.

EP 4 095 965 A1, which constitutes prior art pursuant to Art. 54(3) EPC, discloses an electrode assembly, a battery cell, a battery, a device, a manufacturing method, and a manufacturing device. The electrode assembly includes at least two electrode plates, including a first electrode plate and a second electrode plate that are of opposite polarities. The first electrode plate and the second electrode plate are wound around a winding axis to form a multilayer structure. The multilayer structure includes an accommodation cavity extending along a direction of the winding axis. The accommodation cavity is configured to accommodate an electrolytic solution. The electrode assembly further includes at least one guide path extending along a first direction. The first direction is a direction perpendicular to the winding axis. The guide path is configured to guide the electrolytic solution out of the accommodation cavity. With the guide path disposed as a transmission path of the electrolytic solution, the electrolytic solution in the accommodation cavity can not only be expelled outward through a gap between the first electrode plate and the second electrode plate, but also be expelled outward through the guide path, thereby improving the infiltration effect of the electrolytic solution in the electrode assembly.

US 2013/216879 A1, disclosing the features of the preamble of claim 1, discloses a battery that includes a wound plate pack formed with a positive electrode comprising a positive electrode coated part having a positive foil and a positive electrode uncoated part, and a negative electrode comprising a negative electrode coated part having a negative foil and a negative electrode uncoated part; a battery container into which electrolyte is injected; a positive terminal and a negative terminal provided on the battery container; a positive current collector connecting the positive electrode uncoated part and the positive terminal; and a negative current collector connecting the negative electrode uncoated part and the negative terminal, having multiple through holes between a joining part with the positive current collector in the positive electrode uncoated part and the positive electrode coated part; and multiple through holes between a joining part with the negative current collector in the negative electrode uncoated part and the negative electrode coated part.

JP 4655657 B2 relates to a wound lead-acid battery including positive and negative electrode plates and a separator, each having an active material paste applied to a current collector made of lead or lead alloy foil, wherein the positive and negative electrode plates each have a non-paste-applied portion for current collection in a different direction, and the positive and negative electrode plates and the separator are wound in a spiral shape. In such a battery, the electrode plates and separators are compressed by being wound, making it difficult for the electrolyte to penetrate into the electrode plates. It is suggested that the non-paste-applied portion has holes arranged at predetermined intervals, and that the hole is shaped as a slit that is long in the winding axis direction, wherein the slit does not reach the upper edge of the non-paste-coated portion, and its lower end overlaps the paste-coated portion.

### SUMMARY

### Technical Problem

The present disclosure is designed to solve the problems of the related art, and therefore the present disclosure is directed to improving an electrolyte impregnation property of a cylindrical battery cell by forming an slit through which electrolyte can pass on an electrode tab of the cylindrical battery cell so that the electrolyte is uniformly impregnated in an entire jelly-roll type electrode assembly accommodated inside the cylindrical battery cell.

In addition, the present disclosure is directed to reducing the internal resistance of the cylindrical battery cell by bending one end of the electrode tab to secure a wide contact area between the electrode tab and a current collecting plate of the jelly-roll type electrode assembly.

Furthermore, the present disclosure is directed to improving the coupling strength between the jelly-roll type electrode assembly and the current collecting plate by securing a wide contact area between the electrode tab and the current collecting plate of the jelly-roll type electrode assembly.

However, the technical object to be solved by the present disclosure is not limited to the above, and other objects not mentioned herein will be clearly understood by those skilled in the art from the following disclosure.

### Technical Solution

The invention is defined by the subject matter of the independent claims. Advantageous embodiments are subject to the dependent claims.

A jelly-roll according to an aspect of the present disclosure to accomplish the above object is a jelly-roll in which a stack, which includes a first electrode having a first electrode tab with a first polarity; a second electrode having a second electrode tab with a second polarity; and a separator interposed between the first electrode and the second electrode, is wound in one direction.

Meanwhile, the first electrode tab has a plurality of slits formed along a winding direction of the jelly-roll, and a distance between the plurality of slits gradually increases from a core of the jelly-roll to an outer circumference thereof. The first electrode tab has a plurality of bent portions formed to be spaced apart from each other along the winding direction of the jelly-roll and partitioned by a plurality of cutting lines formed to a predetermined depth from an end of the electrode tab.

At this time, the plurality of slits may have a shape extending in a direction parallel to the winding direction.

Meanwhile, the plurality of slits may be formed on the same line.

Meanwhile, the plurality of slits may be formed on a straight line parallel to the winding direction of the first electrode or the second electrode.

Meanwhile, lengths of the plurality of slits in the winding direction may gradually increase from the core of the jelly-roll to the outer circumference thereof.

Meanwhile, among the plurality of slits, slits adjacent to each other along a radial direction of the jelly-roll may at least partially overlap each other to form an impregnation path through which electrolyte passes along the radial direction.

Here, the impregnation path may be formed from an outer circumferential surface of the jelly-roll to a predetermined depth along the radial direction.

At this time, the plurality of bent portions may be bent in a direction toward a winding axis of the jelly-roll, and the plurality of bent portions may cover at least a part of one surface of the jelly-roll perpendicular to the winding axis.

Alternatively, the plurality of bent portions may be bent in a direction toward a winding axis of the jelly-roll, and the plurality of bent portions may entirely cover one surface of the jelly-roll perpendicular to the winding axis.

Meanwhile, among the plurality of slits, slits adjacent to each other along a radial direction of the jelly-roll may at least partially overlap each other to form an impregnation path through which electrolyte passes along the radial direction, the impregnation path may be formed from an outer circumferential surface of the jelly-roll to a predetermined depth along the radial direction, and the depth of the impregnation path may be greater than or equal to a radial length of an area covered by the bent portion in one surface of the jelly-roll perpendicular to the winding axis.

Meanwhile, the cutting line and the slit may be spaced apart from each other by a predetermined distance.

In addition, a cylindrical battery cell according to an embodiment of the present disclosure comprises the jelly-roll according to the above embodiments.

Meanwhile, a battery pack according to an embodiment of the present disclosure comprises at least one cylindrical battery cell according to an embodiment of the present disclosure.

Meanwhile, a vehicle according to an embodiment of the present disclosure comprises at least one battery pack according to an embodiment of the present disclosure.

### Advantageous Effects

According to the present disclosure, it is possible to improve the electrolyte impregnation of the jelly-roll electrode assembly. More specifically, according to the present disclosure, it is possible to shorten the electrolyte impregnation time into the jelly-roll electrode assembly and improve the uniformity of the electrolyte impregnation. Accordingly, the initial efficiency may be increased. In addition, it is possible to form a uniform SEI (Solid Electrolyte Interphase) layer on the interface of the electrode.

In particular, according to the present disclosure, it is possible to improve the electrolyte impregnation property of a cylindrical battery cell by forming a path through which electrolyte can pass on an electrode tab of the cylindrical battery cell so that the electrolyte is uniformly impregnated in the entire jelly-roll electrode assembly accommodated inside the cylindrical battery cell.

In addition, according to the present disclosure, it is possible to reduce the internal resistance of the cylindrical battery cell by securing a wide contact area between the electrode tab and the current collecting plate of the jelly-roll type electrode assembly.

Furthermore, according to the present disclosure, it is possible to improve the coupling strength between the jelly-roll type electrode assembly and the current collecting plate by securing a wide contact area between the electrode tab and the current collecting plate of the jelly-roll type electrode assembly.

In addition, the present disclosure may have various other effects, which will be described in each embodiment, or a corresponding description will be omitted for effects that can be easily inferred by a person skilled in the art.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for explaining a jelly-roll according to an embodiment of the present disclosure.
FIG. 2 is a diagram for explaining a state in which a first electrode applied to the jelly-roll of FIG. 1 is spread.
FIG. 3 is a plan view of the jelly-roll of FIG. 1.
FIG. 4 is a diagram for explaining an impregnation path of the jelly-roll of FIG. 3.
FIG. 5 is a diagram for explaining an impregnation path of a jelly-roll according to another embodiment of the present disclosure.
FIG. 6 is a front sectioned view of the jelly-roll of FIG. 1.
FIG. 7 is a plan view of a jelly-roll having a different shape from the jelly-roll shown in FIG. 3.
FIG. 8 is a front sectioned view of the jelly-roll of FIG. 7.
FIG. 9 is a diagram for explaining a battery pack including at least one cylindrical battery cell that has the jelly-roll of FIG. 1.
FIG. 10 is a diagram for explaining a vehicle that includes the battery pack of FIG. 9.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In order to help understanding of the present disclosure, the accompanying drawings are not drawn to scale, but dimensions of some components may be exaggerated.

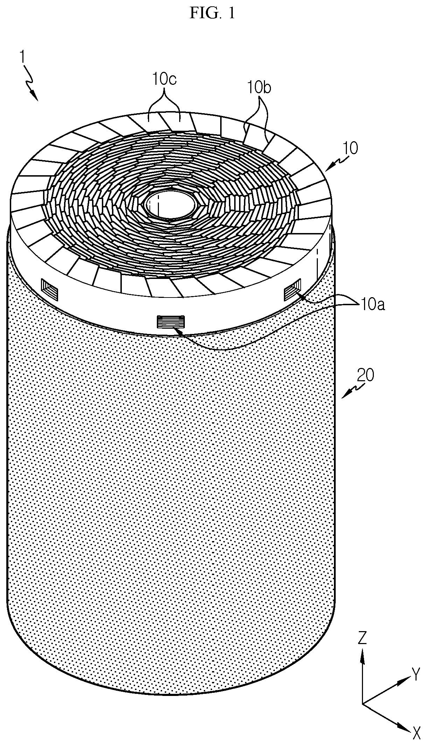

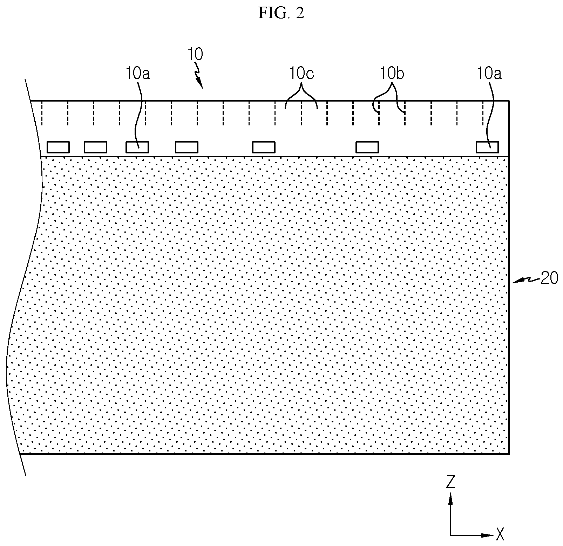

FIG. 1 is a diagram for explaining a jelly-roll according to an embodiment of the present disclosure, and FIG. 2 is a diagram for explaining a state in which a first electrode applied to the jelly-roll of FIG. 1 is spread.

Referring to FIGS. 1 and 2, the electrode assembly is an electrode assembly having a jelly-roll shape in which a stack including a first electrode, a second electrode and a separator is wound. Hereinafter, the electrode assembly having a jelly-roll shape will be referred to as a jelly-roll 1.

The first electrode includes a first electrode tab with a first polarity, and the second electrode includes a second electrode tab with a second polarity. For example, the first electrode may be a positive electrode or a negative electrode, and the second electrode may be an electrode having a polarity opposite to that of the first electrode.

The separator is interposed between the first electrode and the second electrode. The stack in which the first electrode, the separator, the second electrode, and the separator are sequentially stacked at least once is wound based on a winding center C extending along a width direction of the first electrode and the second electrode, that is, a height direction of the jelly-roll 1 (parallel to the Z-axis) to form the jelly-roll 1. That is, the jelly-roll 1 has a structure in which a stack including a first electrode, a second electrode, and a separator interposed between the first and second electrodes is wound in one direction.

Each of the first electrode and the second electrode includes an electrode tab and a coated portion.

The first electrode includes a first electrode current collector and a first electrode active material coated on one surface or both surfaces of the first electrode current collector. At one end of the first electrode current collector in a width direction (parallel to the Z-axis), there is a non-coated portion on which the first electrode active material is not coated. The non-coated portion functions as a first electrode tab 10 by itself. That is, the first electrode tab 10 is the first non-coated portion. The first electrode tab 10 is provided above the electrode assembly accommodated in a battery can in a height direction (parallel to the Z-axis). At an opposite side of the non-coated portion of the first electrode current collector, there is a coated portion 20 coated with the first electrode active material.

Meanwhile, although not shown in the drawings, the second electrode includes a second electrode current collector and a second electrode active material coated on one surface or both surfaces of the second electrode current collector. At the other end of the second electrode current collector in the width direction, there is a non-coated portion on which the second electrode active material is not coated. The non-coated portion functions as a second electrode tab by itself. That is, the second electrode tab 10 is the second non-coated portion. The second electrode tab is provided under the electrode assembly accommodated in the battery can in the height direction. At an opposite side of the non-coated portion of the second electrode current collector, there is a coated portion coated with the second electrode active material.

Meanwhile, in the present disclosure, the positive active material coated on the positive electrode plate and the negative electrode active material coated on the negative electrode plate may be used without limitation as long as the active material is known in the art.

In one example, the positive electrode active material may include alkali metal compounds represented by a general formula A[AₓM_{y}]O_{2+z} (A includes at least one element among Li, Na and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x + y ≤ 2, 0.1 ≤ z ≤ 2; the stoichiometric modulus of components included in x, y, z and M is selected to remain electrically neutral).

In another example, the positive electrode active material may be an alkali metal compound xLiM¹O₂-(1-x)Li₂M²O₃ (M¹ comprises at least one element having an average oxidation state 3; M² comprises at least one element having an average oxidation state 4; 0 ≤ x ≤ 1) disclosed in US6,677,082, US6,680,143, et al.

In another example, the positive electrode active material may be lithium metal phosphate represented by a general formula LiₐM¹ₓFe₁₋ₓM²_{y}P_{1-y}M³_{z}O_{4-z} (M¹ includes at least one element selected from Ti, Si, Mn, Co, Fe, V, Cr, Mo, Ni, Nd, Al, Mg and Al; M² includes at least one element selected from Ti, Si, Mn, Co, Fe, V, Cr, Mo, Ni, Nd, Al, Mg, Al, As, Sb, Si, Ge, V and S; M³ includes a halogen element optionally including F; 0 < a ≤ 2, 0 ≤ x ≤ 1, 0 ≤ y < 1, 0 ≤ z < 1; the stoichiometric modulus of components included in a, x, y, z, M¹, M², and M³ are selected to remain electrically neutral), or Li₃M₂(PO₄)₃ [M includes at least one element selected from Ti, Si, Mn, Fe, Co, V, Cr, Mo, Ni, Al, Mg and Al].

Preferably, the positive electrode active material may include primary particles and/or secondary particles in which the primary particles are aggregated.

In one example, the negative electrode active material may use a carbon material, lithium metal or lithium metal compound, silicon or silicon compound, tin or tin compound. Metal oxides such as TiO₂ and SnO₂ with a potential of less than 2 V may also be used as the negative electrode active material. As the carbon material, all of low-crystalline carbon, high-crystalline carbon, and the like may be used.

The separator may use a porous polymer film, for example, a porous polymer film made of a polyolefin-based polymer such as ethylene homopolymer, propylene homopolymer, ethylene/butene copolymer, ethylene/hexene copolymer and ethylene/methacrylate copolymer, or laminates thereof. As another example, the separator may use a conventional porous nonwoven fabric, for example, a nonwoven fabric made of high melting point glass fiber, polyethylene terephthalate fiber, or the like.

At least one surface of the separator may include a coating layer of inorganic particles. It is also possible that the separator itself is made of a coating layer of inorganic particles. Particles constituting the coating layer may have a structure coupled with a binder so that interstitial volumes exist between adjacent particles.

The inorganic particles may be formed of an inorganic material having a dielectric constant of 5 or more. As a non-limiting example, the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The electrolyte may be a salt having a structure such as A⁺B⁻⁻. Here, A⁺ includes an alkali metal cation such as Li⁺, Na⁺, or K⁺, or an ion composed of a combination thereof. In addition, B⁻⁻ includes at least one anion selected from the group consisting of F⁻⁻, Cl⁻⁻, Br⁻⁻, I⁻⁻, NO₃⁻⁻, N(CN)₂⁻⁻, BF₄⁻⁻, ClO₄⁻⁻, AlO₄⁻⁻, AlCl₄⁻⁻, PF₆⁻⁻, SbF₆⁻⁻, AsF₆⁻⁻, BF₂C₂O₄⁻⁻, BC₄O₈⁻⁻, (CF₃)₂PF₄⁻⁻, (CF₃)₃PF₃⁻, (CF₃)₄PF₂⁻⁻, (CF₃)₅PF⁻⁻, (CF₃)₆P⁻⁻, CF₃SO₃⁻⁻, C₄F₉SO₃⁻⁻, CF₃CF₂SO₃⁻⁻, (CF₃SO₂)₂N⁻⁻, (FSO₂)₂N⁻⁻, CF₃CF₂ (CF₃)₂CO⁻⁻, (CF₃SO₂)₂CH⁻⁻, (SF₅)₃C⁻⁻, (CF₃SO₂)₃C⁻⁻, CF₃(CF₂)₇SO₃⁻⁻, CF₃CO₂⁻⁻, CH₃CO₂⁻,SCN⁻⁻ and (CF₃CF₂SO₂)₂N⁻⁻.

The electrolyte may also be dissolved in an organic solvent and then used. The organic solvent may use propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

In the jelly-roll 1 of the present disclosure, the first electrode and the second electrode extend in opposite directions along the height direction (parallel to the Z-axis) of the j elly-roll 1. In the following description, the structure of the first electrode will be described in detail. However, this is only an exemplary description, and the structure of the first electrode to be described below may be applied to both the first electrode and the second electrode, or may be applied only to the second electrode.

Referring to FIGS. 1 and 2, the first electrode tab 10 includes a plurality of slits 10a. The first electrode tab 10 further includes a plurality of cutting lines 10b and a bent portion 10c partitioned by the cutting lines 10b.

The plurality of slits 10a may be formed by, for example, mold punching or laser notching.

The plurality of slits 10a are formed along a circumferential direction of the jelly-roll 1, that is, a winding direction of the jelly-roll 1. At this time, the plurality of slits 10a may be formed on the same line. For example, the plurality of slits 10a may be formed on a straight line parallel to the winding direction of the first electrode and/or the second electrode. That is, the longitudinal extension lines of the slits 10a adjacent to each other along the winding direction may overlap each other.

Referring to FIGS. 1 and 2, the distance between the plurality of slits 10a may gradually increase from a core of the jelly-roll 1 to an outer circumference thereof. That is, the plurality of slits 10a may be provided in a gradient pattern.

More specifically, referring to FIG. 2, the sheet-shaped first electrode and/or second electrode has a structure of being wound in one direction. At this time, the plurality of slits 10a are provided along the winding direction. At the core of the first electrode and/or the second electrode, the distance between the slits 10a may be configured to be relatively close, and the distance between the slits 10a may be configured to gradually increase toward the outer circumference. This is because, as the first electrode and/or the second electrode is wound in one direction, the radius of the jelly-roll 1 increases, and the length of the circumference formed by the layers constituting the jelly-roll 1 increases toward the outer circumference. That is, as the first electrode and/or the second electrode is wound in one direction, the size of the circumference of the outermost layer gradually increases. Therefore, when forming the slits 10a at the sheet-shaped first electrode and/or second electrode, the distance between the slits 10a should be increased as being closer to the outer circumference, so that a slit 10a provided in a previous layer and a slit 10a provided in a next layer may face each other to form an impregnation path IP. In other words, in order to provide the slits 10a at a specific angle of the jelly-roll 1, the distance between the slits 10a should increase as the number of windings increases. For example, if the slits 10a are formed at about 90° intervals along the circumference of the jelly-roll 1, the distance between the slits 10a should increase as the number of windings increases. The exact position of the slit 10a for forming the impregnation path IP may vary depending on the number of slits 10a per circumference, the thickness of the first electrode, the thickness of the second electrode, the thickness of the separator, and the like.

According to this structure of the present disclosure, since the slits 10a may be provided at points of a specific angle of the jelly-roll 1, the impregnation path IP may be formed effectively. Therefore, the electrolyte impregnation property at the electrode center of the jelly-roll 1 may be improved.

In addition, according to the above structure of the present disclosure, it is not necessary to make the size of the slit 10a excessively large, and even if the size of the slit 10a is relatively small, the impregnation path IP may be reliably formed. Accordingly, it is possible to minimize the weakening of the strength of the first electrode tab 10 and/or the second electrode tab.

That is, with the above structure, in the present disclosure, the strength of the first electrode tab 10 may be secured at a certain level.

For example, if the plurality of slits 10a are not provided in a gradient pattern, but are provided at regular intervals or at random intervals, in order to form an impregnation path IP in the radial direction of the jelly-roll 1, the length of the plurality of slits 10a in the winding direction must be long. This is because the slit 10a provided in the previous layer and the slit 10a provided in the next layer are more likely to face each other when the length of the plurality of slits 10a in the winding direction is long. Such a structure is obtained since the increase in the circumferential length according to the increase in the number of windings is not put into consideration in the design. Therefore, according to this structure, the strength of the first electrode tab 10 at the position where the plurality of slits 10a are formed may become very weak. That is, in the first electrode tab 10, the area of the cross section at the position where the slit 10a is formed, that is, the area of the cross section cut along a direction substantially perpendicular to the winding axis of the jelly-roll 1 (parallel to the X-Y plane) is reduced. Accordingly, the first electrode tab 10 may be damaged due to shock or vibration applied during the use of the cylindrical battery cell, which may cause poor performance of the cylindrical battery cell and/or safety issues such as ignition due to internal short circuit.

On the other hand, according to the present disclosure, since the slit 10a provided in the previous layer and the slit 10a provided in the next layer face each other, even if the length of the slit 10a in the winding direction is relatively small, the impregnation path IP may be reliably formed. According to this structure, the reduction of the area of the cross section of the first electrode tab 10 at the position where the slit 10a is formed, that is, the cross section cut along the direction perpendicular to the winding axis of jelly-roll 1 (parallel to the XY plane) may be minimized. Accordingly, the tensile strength of the first electrode tab 10 in a winding axis direction (parallel to the Z axis) may be improved. Therefore, in this case, even when an external force is applied to the first electrode tab 10, the first electrode tab 10 is not easily broken.

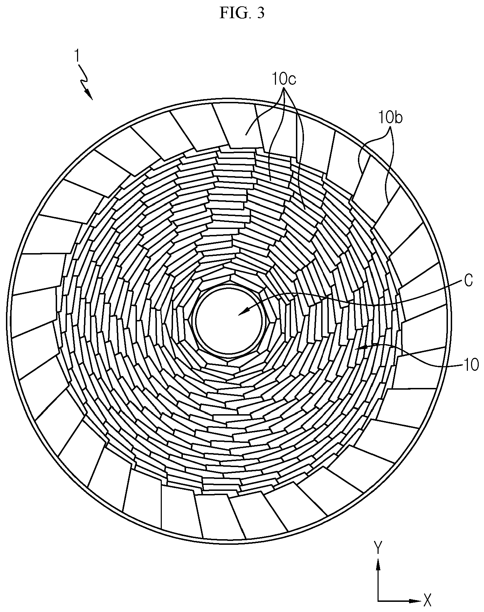

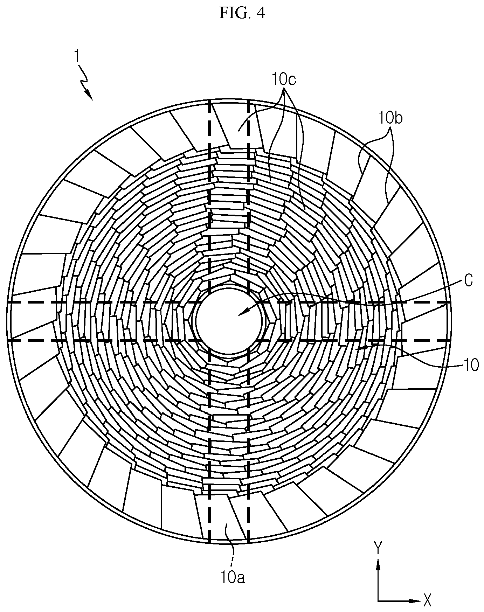

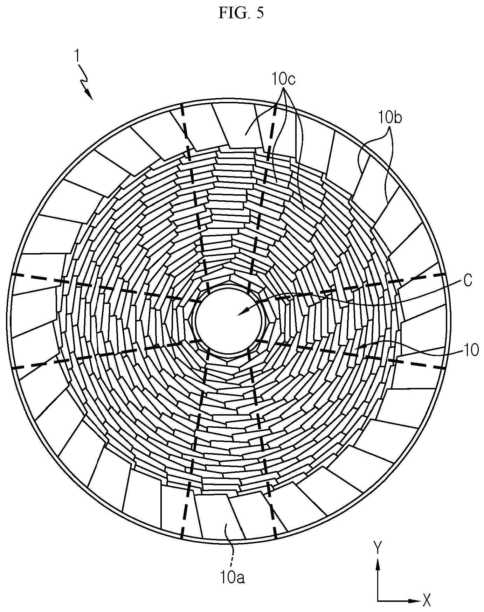

FIG. 3 is a plan view of the jelly-roll of FIG. 1. FIG. 4 is a diagram for explaining an impregnation path of the jelly-roll of FIG. 3, and FIG. 5 is a diagram for explaining an impregnation path of a jelly-roll according to another embodiment of the present disclosure.

As an embodiment of the present disclosure, referring to FIG. 4, the slits 10a may be formed to have a constant length in the winding direction regardless of locations where the slits 10a are provided. According to such a structure, as can be seen in FIG. 4, the impregnation paths IP may be formed to have uniform widths.

On the other hand, as another embodiment of the present disclosure, referring to FIG. 5, the lengths of the slits 10a in the winding direction may gradually increase from the core of the jelly-roll 1 toward the outer circumference. Accordingly, as can be seen in FIG. 5, the widths of the impregnation paths IP may gradually increase toward the outer circumference of the jelly-roll 1. In this case, the center of the winding direction length of the slit 10a provided in the previous layer may coincide with the center of the winding direction length of the slit 10a provided in the next layer. According to this structure, since the area of the slit 10a provided in the outermost layer, which is a site where the electrolyte starts to be impregnated with the jelly-roll 1, is large, the electrolyte may be smoothly impregnated into the inside of the jelly-roll 1. At the same time, since the area of the slit 10a provided at the core is formed small, it is possible to minimize the reduction of the area of the cross section cut along a direction perpendicular to the winding axis of the jelly-roll 1 (parallel to the X-Y plane). Accordingly, the tensile strength of the first electrode tab 10 in the winding axis direction (parallel to the Z axis) may be improved. Therefore, in this case, even when an external force is applied to the first electrode tab 10, the first electrode tab 10 is not easily broken.

On the other hand, for the same purpose as minimizing the reduction of the area of the cross section at the position where the slit 10a is formed as described above, the slit 10a may be arranged to be spaced apart from the cutting line 10b, which will be described later, by a predetermined distance along an extension direction (parallel to the Z-axis) of the winding axis. Accordingly, the possibility of breakage of the first electrode tab 10 due to an external force such as shock or vibration that may be applied during manufacturing and use of the cylindrical battery cell may be further reduced.

Meanwhile, as described above, in this specification, only the case in which the first electrode is provided with the slit 10a has been described for convenience of description, but the slit 10a may be provided only at the second electrode, or may be provided at both the first electrode and the second electrode.

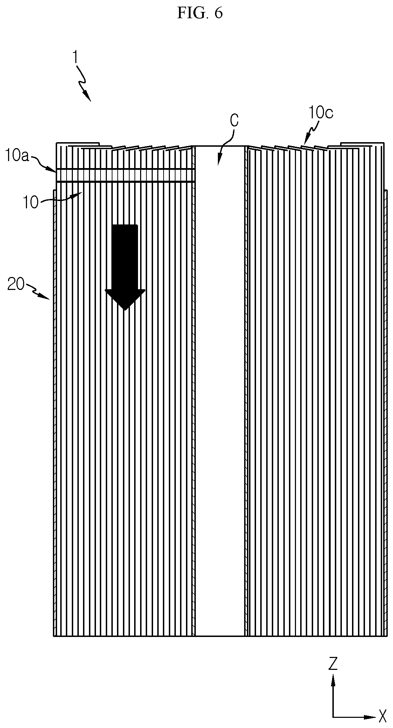

FIG. 3 is a front view of the jelly-roll of FIG. 1, and FIG. 6 is a front sectioned view of the jelly-roll of FIG. 1.

Referring to FIGS. 3 and 6, the first electrode tabs 10 include a plurality of bent portions 10c that are formed to be spaced apart from each other along the winding direction of the jelly-roll 1 and that are partitioned by the plurality of cutting lines 10b formed to a predetermined depth from an end of the first electrode tab 10. Accordingly, the bent portion 10c is provided at one end of the first electrode tab 10. That is, the first electrode tab 10 may include a plurality of segments divided along the circumferential direction of the jelly-roll 1 by, for example, notching, and the plurality of segments may be bent along the radial direction of the jelly-roll 1. Each of the plurality of bent segments corresponds to the above-described bent portion 10c.

The plurality of bent portions 10c may be bent, for example in a direction toward the winding axis of the jelly-roll 1 to cover at least a part of one surface of the jelly-roll 1 substantially perpendicular to the winding axis. For example, referring to FIGS. 3 and 6, the plurality of bent portions 10c may entirely cover one surface of the jelly-roll 1 perpendicular to the winding axis.

In this way, since the bent portions 10c provided at one end of the first electrode tab 10 are bent to cover one surface of the jelly-roll 1 perpendicular to the winding axis, a contact area between a current collecting plate (not shown) to be coupled on one surface of the jelly-roll 1 and the first electrode tab 10 may be secured widely. Accordingly, the internal resistance of the cylindrical battery cell may be reduced. In addition, the coupling strength between the jelly-roll 1 and the current collecting plate may be improved.

On the other hand, after the jelly-roll 1 is received in the battery can, electrolyte may be injected through a top opening of the battery can. At this time, since the plurality of bent portions 10c entirely cover one surface of the jelly-roll 1 perpendicular to the winding axis, the electrolyte may not be smoothly impregnated through the top of the jelly-roll 1. In particular, in the case of a cylindrical battery cell of medium or large size, the electrolyte may not be impregnated to the center of the jelly-roll 1.

Therefore, in the present disclosure, among the plurality of slits 10a, the slits 10a adjacent to each other along the radial direction of the jelly-roll 1 may at least partially overlap each other to form an impregnation path IP through which the electrolyte can pass along the radial direction. At this time, the impregnation path IP may be formed from the outer circumferential surface of the jelly-roll 1 to a predetermined depth along the radial direction.

For example, referring to FIG. 6, the plurality of bent portions 10c provided at one end of the first electrode tab 10 may be bent in a direction toward the winding axis to entirely cover one surface of the jelly-roll 1 perpendicular to the winding axis. At this time, among the plurality of slits 10a, the slits 10a adjacent to each other along the radial direction of the jelly-roll 1 may at least partially overlap each other, thereby forming an impregnation path IP through which the electrolyte can pass along the radial direction. In FIG. 6, the impregnation path IP is formed along the radial direction from the outer circumferential surface of the jelly-roll 1 to the winding center C. Therefore, the electrolyte may move to the center of the jelly-roll 1 through the impregnation paths IP formed through the jelly-roll 1. The electrolyte introduced into the impregnation paths IP may flow down due to the force of gravity. Therefore, in the jelly-roll 1 of the present disclosure, the entire area in the height direction (direction parallel to the Z axis) and the entire area in the radial direction may be uniformly impregnated by the electrolyte.

Meanwhile, in the present invention, when the bent portion 10c as described above is provided in the first electrode tab 10, the slit 10a may be provided in an area other than the area in which the bent portion 10c is formed. Accordingly, the slit 10a may be provided on the outer peripheral surface of the jelly-roll 1.

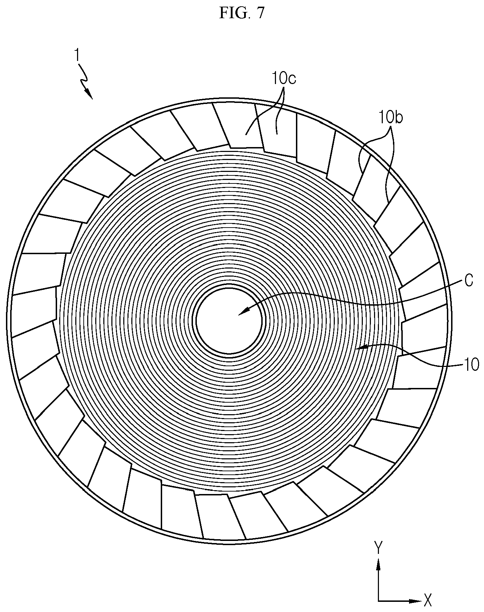

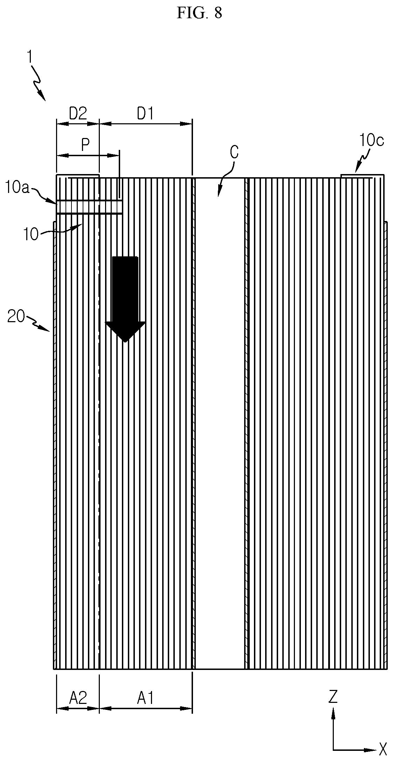

FIG. 7 is a plan view of a jelly-roll having a different shape from the jelly-roll shown in FIG. 3, and FIG. 8 is a front sectioned view of the jelly-roll of FIG. 7.

Referring to FIGS. 7 and 8, the plurality of bent portions 10c may also be bent in a direction toward the winding axis of the jelly-roll 1 to cover only a part of one surface of the jelly-roll 1 perpendicular to the winding axis.

In this case, the length of the first electrode tab 10 in an area adjacent to the winding center C of the jelly-roll 1 and the length of the first electrode tab 10 in an area adjacent to the outer circumferential surface of the jelly-roll 1 may be different from each other. Specifically, the length of the first electrode tab 10 in the area adjacent to the winding center C of the jelly-roll 1 may be shorter than the length of the first electrode tab 10 in the area adjacent to the outer circumferential surface of the jelly-roll 1. In this case, the cutting line 10b and the bent portion 10c may not be provided to the first electrode tab 10 in the area adjacent to the winding center C of the jelly-roll 1. That is, the plurality of cutting lines 10b and the plurality of bent portions 10c may be provided only to the first electrode tab 10 in the area adjacent to the outer circumferential surface of the jelly-roll 1.

Therefore, according to the above embodiment, in the area adjacent to the winding center C of the jelly-roll 1, the first electrode tab 10 may have a structure that is open upward without being bent. Hereinafter, the area whose upper side is not covered by the bent portion 10c will be referred to as a first area A1. At this time, the radial length of the first area A1 will be referred to as D1.

On the other hand, the plurality of bent portions 10c provided to the first electrode tab 10 in the area adjacent to the outer circumferential surface of the jelly-roll 1 are bent in a direction toward the winding axis to cover only a part of one surface of the jelly-roll 1 perpendicular to the winding axis. Hereinafter, the area whose upper side is covered by the bent portion 10c will be referred to as a second area A2. At this time, the radial length of the second area A2 will be referred to as D2.

According to this structure, since the first area A1 is not covered by the bent portion 10c and has a structure that is open upward, the electrolyte introduced through the top opening of the battery can may smoothly flow into the first area A1. Therefore, the electrolyte impregnation property may be further improved.

However, in this case, the impregnation rate of the second area A2 whose upper side is covered due to bending of the plurality of bent portions 10c provided to the first electrode tab 10 toward the core may be slightly lower than the impregnation rate of the first area A1 whose upper side is not covered. Therefore, it is necessary to improve the impregnation rate of the second area A2. Accordingly, in the present disclosure, the depth P of the impregnation path IP may be greater than or equal to the radial length of the area covered by the bent portion 10c, in one surface of the jelly-roll 1 perpendicular to the winding axis. That is, referring to FIG. 8, the depth P of the impregnation path IP may be formed to be greater than or equal to the radial length D2 of the second area A2.

According to this structure, the electrolyte may move to at least a boundary point between the second area A2 and the first area A1 through the impregnation path IP. Alternatively, the electrolyte may move beyond the second area A2 to the first area A1. After that, the electrolyte may flow down due to the force of gravity. Therefore, the jelly-roll 1 of the present disclosure may be uniformly impregnated by the electrolyte even to the inside thereof.

Meanwhile, as described above, in this specification, only the case in which the cutting line 10b and the bent portion 10c are provided to the first electrode has been described for convenience of description, but the cutting line 10b and the bent portion 10c may also be provided only to the second electrode or to both the first electrode and the second electrode.

### <Test of impregnation property and durability>

The electrolyte impregnation property of the jelly-roll of the present disclosure was evaluated. In addition, a drop test and a vibration test were performed to evaluate the strength of the electrode tab.

### 1) Evaluation of the electrolyte impregnation property

A jelly-roll in which slits are formed for electrolyte impregnation is fabricated. Then, after the jelly-roll is received through the top or bottom opening of the battery can, electrolyte is injected into the battery can. After the electrolyte is injected, it is aged for 24 hours, and then the level of impregnation of the electrolyte (checking whether a non-impregnation region exists) is analyzed.
O (pass): Non-impregnation area does not exist
X (fail): Non-impregnation area exists

### 2) Evaluation of strength of the electrode tab - Drop test

After the jelly-roll and the current collecting plate are welded, this is inserted into the battery can to manufacture a cylindrical battery cell. After that, the cylindrical battery cell fully charged up to 4.2 V freely falls from a height of 1.0 m onto a concrete floor, and then it is checked whether short circuit and/or ignition occurs in the cylindrical battery cell.
O (pass): Short circuit and/or ignition does not occur in the battery
X (fail): Short circuit and/or ignition occurs in the battery

### 3) Evaluation of strength of the electrode tab - Vibration test

After the jelly-roll and the current collecting plate are welded, this is inserted into the battery can to manufacture a cylindrical battery cell. After that, the cylindrical battery cell fully discharged to 2.5 V is vibrated. The vibration method is to change vibration the frequency every 15 minutes as 7 Hz ↔ 200 Hz, which is repeated 12 times in each of X-axis, Y-axis and Z-axis directions. After the vibration test is completed, it is checked whether short circuit and/or ignition occurs in the cylindrical battery cell.
O (pass): Short circuit and/or ignition does not occur in the battery
X (fail): Short circuit and/or ignition occurs in the battery

### Example 1

A jelly-roll was manufactured such that a plurality of slits are formed on the same line and the distance between the plurality of slits gradually increases from the core of the jelly-roll toward the outer circumference (gradient pattern type).

### Comparative example 1

Except that the slit was not provided at all, a jelly-roll was manufactured with the other conditions being the same as in Example 1.

### Comparative example 2

Except that a plurality of slits were provided at regular intervals, a jelly-roll was manufactured with the other conditions being the same as in Example 1.

### Comparative example 3

A jelly-roll was manufactured such that among the plurality of slits, slits adjacent to each other along the winding direction were not formed on the same line but were provided at staggered positions (zigzag type).

For each jelly-roll obtained as described above, the results of evaluating the electrolyte impregnation property and the strength of the electrode tab are summarized in Table 1.

**[Table 1]**

| | Formation of slits | Electrolyte impregnation property test | Drop test | Vibration test |
|---|---|---|---|---|
| **Comparative example 1** | no | X | O | O |
| **Comparative example 2** | on the same line, regular intervals | O | X | X |
| **Comparative example 3** | zigzag, regular intervals | O | X | X |
| **Example 1** | on the same line, gradient pattern | O | O | O |

From this table, the following points are evident.

In the example 1, there was no non-impregnation area in the jelly-roll since the electrolyte impregnation property was excellent. In addition, the jelly-roll of Example 1 passed the drop test and the vibration test, so it might be confirmed that the electrode tab had excellent strength.

In the comparative example 1, since the slit was not provided, the electrolyte impregnation property was poor, and thus a non-impregnation area existed in the jelly-roll.

In the comparative example 2, the electrolyte impregnation property was satisfactory, but since a plurality of slits elongated in the winding direction were provided on the same line at regular intervals, the strength of the electrode tab was not secured. Specifically, the jelly-roll of the comparative example 2 was damaged in a part of the electrode tab as a result of the drop test and the vibration test. That is, the jelly-roll of the comparative example 2 could not secure the quality and safety of the battery since the strength of the electrode tab was low.

In the comparative example 3, the electrolyte impregnation property was satisfied, but the strength of the electrode tab was not secured because a plurality of slits elongated in the winding direction were provided in a zigzag pattern at alternating positions. Specifically, the jelly-roll of the comparative example 3 was damaged in a part of the electrode tab as a result of the drop test and the vibration test. That is, the jelly-roll of the comparative example 3 could not secure the quality and safety of the battery since the strength of the electrode tab was low.

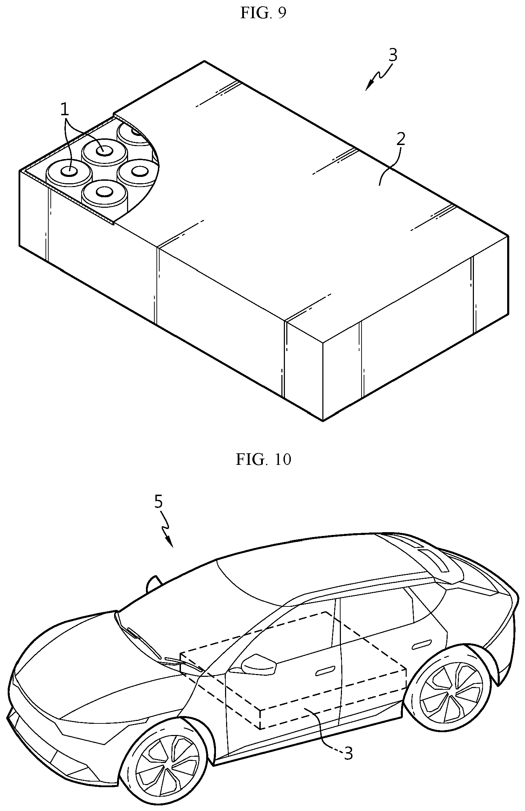

FIG. 9 is a diagram for explaining a battery pack including at least one cylindrical battery cell that has the jelly-roll of FIG. 1.

Referring to FIG. 9, a battery pack 3 according to an embodiment of the present disclosure includes an assembly in which cylindrical battery cells are electrically connected and a pack housing 2 for accommodating the assembly. The cylindrical battery cell is a battery cell according to the above embodiment. In the drawings, parts such as a bus bar, a cooling unit, and an external terminal for electrical connection of cylindrical battery cells are omitted for convenience of illustration.

The battery pack 3 may be mounted on the vehicle. The vehicle may be, for example, an electric vehicle, a hybrid electric vehicle, or a plug-in hybrid vehicle. The vehicle includes a four-wheeled vehicle or a two-wheeled vehicle.

FIG. 10 is a diagram for explaining a vehicle that includes the battery pack of FIG. 9.

Referring to FIG. 10, a vehicle 5 according to an embodiment of the present disclosure includes the battery pack 3 according to an embodiment of the present disclosure. The vehicle 5 operates by receiving power from the battery pack 3 according to an embodiment of the present disclosure.

On the other hand, although terms indicating directions such as up and down are used in this specification, these terms are only for convenience of explanation, and it is obvious to those skilled in the art of the present disclosure that they may vary depending on the location of a target object or the location of an observer.

### [Explanation of signs]

1 jelly-roll
10 first electrode tab (non-coated portion)
10a slit
10b cutting line
10c bent portion
20 coated portion
IP impregnation path
P depth of the impregnation path
C winding center
A1 first area
A2 second area
D1 radial length of the first area
D2 radial length of the second area
2 pack housing
3 battery pack
5 vehicle

## Claims

1. A jelly-roll (1) having a structure in which a stack, which includes first electrode having a first electrode tab (10) with a first polarity; a second electrode having a second electrode tab with a second polarity; and a separator interposed between the first electrode and the second electrode, is wound in one direction,
wherein the first electrode tab (10) has a plurality of slits (10a) formed along a winding direction of the jelly-roll (1), and
**characterized in that**
a distance between the plurality of slits (10a) gradually increases from a core (C) of the jelly-roll (1) to an outer circumference thereof; and
**in that** the first electrode tab (10) has a plurality of bent portions (10c) formed to be spaced apart from each other along the winding direction of the jelly-roll (1) and partitioned by a plurality of cutting lines (10b) formed to a predetermined depth from an end of the electrode tab.

2. The jelly-roll (1) according to claim 1,
wherein the plurality of slits (10a) have a shape extending in a direction parallel to the winding direction.

3. The jelly-roll according to claim 1 or 2, wherein the plurality of slits are formed on the same line.

4. The jelly-roll according to claim 1, wherein the plurality of slits (10a) are formed on a straight line parallel to the winding direction of the first electrode or the second electrode.

5. The jelly-roll (1) according to claim 1, wherein the length of the slits (10a) in the winding direction is constant.

6. The jelly-roll (1) according to any one of claims 1 to 3,
wherein lengths of the plurality of slits (10a) in the winding direction gradually increase from the core (C) of the jelly-roll (1) to the outer circumference thereof.

7. The jelly-roll (1) according to claim 1,
wherein among the plurality of slits (10a), slits (10a) adjacent to each other along a radial direction of the jelly-roll (1) at least partially overlap each other to form an impregnation path (IP) through which electrolyte passes along the radial direction.

8. The jelly-roll (1) according to claim 6,
wherein the impregnation path (IP) is formed from an outer circumferential surface of the jelly-roll (1) to a predetermined depth along the radial direction.

9. The jelly-roll (1) according to claim 1,
wherein the plurality of bent portions (10c) are bent in a direction toward a winding axis of the jelly-roll (1), and
wherein the plurality of bent portions (10c) cover at least a part of one surface of the jelly-roll (1) perpendicular to the winding axis.

10. The jelly-roll (1) according to claim 1,
wherein the plurality of bent portions (10c) are bent in a direction toward a winding axis of the jelly-roll (1), and
wherein the plurality of bent portions (10c) entirely cover one surface of the jelly-roll (1) perpendicular to the winding axis except for the core (C).

11. The jelly-roll (1) according to claim 9,
wherein the impregnation path (IP) is formed from an outer circumferential surface of the jelly-roll (1) to a predetermined depth along the radial direction, and
wherein the depth (P) of the impregnation path (IP) is greater than or equal to a radial length of an area covered by the bent portion (10c) in one surface of the jelly-roll (1) perpendicular to the winding axis.

12. The jelly-roll (1) according to claim 1,
wherein the cutting lines (10b) and the slits (10a) are spaced apart from each other by a predetermined distance.

13. A cylindrical battery cell, comprising the jelly-roll (1) according to any one of claims 1 to 12.

14. A battery pack (3), comprising at least one cylindrical battery cell according to claim 13.

15. A vehicle (5), comprising at least one battery pack (3) according to claim 14.

## Patentansprüche

1. Jelly-Roll (1) mit einer Struktur, in der ein Stapel, der eine erste Elektrode mit einem ersten Elektrodenableiterabschnitt (10) mit einer ersten Polarität, eine zweite Elektrode mit einem zweiten Elektrodenableiterabschnitt mit einer zweiten Polarität und einen zwischen der ersten Elektrode und der zweiten Elektrode angeordneten Separator umfasst, in einer Richtung gewickelt ist,
wobei der erste Elektrodenableiterabschnitt (10) eine Vielzahl von Schlitzen (10a) aufweist, die entlang einer Wickelrichtung der Jelly-Roll (1) ausgebildet sind, und
**dadurch gekennzeichnet, dass**
ein Abstand zwischen der Vielzahl von Schlitzen (10a) von einem Kern (C) der Jelly-Roll (1) zu einem Außenumfang davon allmählich zunimmt; und
dass der erste Elektrodenableiterabschnitt (10) eine Vielzahl von gebogenen Abschnitten (10c) aufweist, die so ausgebildet sind, dass sie entlang der Wickelrichtung der Jelly-Roll (1) voneinander beabstandet sind und durch eine Vielzahl von Schnittlinien (10b) unterteilt sind, die bis zu einer vorbestimmten Tiefe von einem Ende des Elektrodenableiterabschnitts ausgebildet sind.

2. Jelly-Roll (1) nach Anspruch 1,
wobei die Vielzahl von Schlitzen (10a) eine Form aufweisen, die sich in einer Richtung parallel zur Wickelrichtung erstreckt.

3. Jelly-Roll nach Anspruch 1 oder 2, wobei die Vielzahl von Schlitzen auf derselben Linie ausgebildet sind.

4. Jelly-Roll nach Anspruch 1, wobei die Vielzahl von Schlitzen (10a) auf einer geraden Linie parallel zur Wickelrichtung der ersten Elektrode oder der zweiten Elektrode ausgebildet sind.

5. Jelly-Roll (1) nach Anspruch 1, wobei die Länge der Schlitze (10a) in der Wickelrichtung konstant ist.

6. Jelly-Roll (1) nach einem der Ansprüche 1 bis 3,
wobei Längen der Vielzahl von Schlitzen (10a) in der Wickelrichtung vom Kern (C) der Jelly-Roll (1) zum ihrem Außenumfang hin allmählich zunehmen.

7. Jelly-Roll (1) nach Anspruch 1,
wobei unter der Vielzahl von Schlitzen (10a) Schlitze (10a), die entlang einer radialen Richtung der Jelly-Roll (1) zueinander benachbart sind, einander zumindest teilweise überlappen, um einen Imprägnierungsweg (IP) zu bilden, durch das Elektrolyt entlang der radialen Richtung hindurchgeht.

8. Jelly-Roll (1) nach Anspruch 6,
wobei der Imprägnierungsweg (IP) von einer Außenumfangsfläche der Jelly-Roll (1) bis zu einer vorbestimmten Tiefe entlang der radialen Richtung ausgebildet ist.

9. Jelly-Roll (1) nach Anspruch 1,
wobei die Vielzahl von gebogenen Abschnitten (10c) in einer Richtung zu einer Wickelachse der Jelly-Roll (1) hin gebogen sind, und
wobei die Vielzahl von gebogenen Abschnitten (10c) zumindest einen Teil einer Oberfläche der Jelly-Roll (1) senkrecht zu der Wickelachse bedecken.

10. Jelly-Roll (1) nach Anspruch 1,
wobei die Vielzahl von gebogenen Abschnitten (10c) in einer Richtung zu einer Wickelachse der Jelly-Roll (1) hin gebogen sind, und
wobei die Vielzahl von gebogenen Abschnitten (10c) eine Oberfläche der Jelly-Roll (1) senkrecht zu der Wickelachse mit Ausnahme des Kerns (C) vollständig bedecken.

11. Jelly-Roll (1) nach Anspruch 9,
wobei der Imprägnierungsweg (IP) von einer Außenumfangsfläche der Jelly-Roll (1) bis zu einer vorbestimmten Tiefe entlang der radialen Richtung ausgebildet ist, und
wobei die Tiefe (P) des Imprägnierungswegs (IP) größer oder gleich einer radialen Länge eines Bereichs ist, der durch den gebogenen Abschnitt (10c) in einer Oberfläche der Jelly-Roll (1) senkrecht zu der Wickelachse bedeckt ist.

12. Jelly-Roll (1) nach Anspruch 1,
wobei die Schnittlinien (10b) und die Schlitze (10a) um einen vorbestimmten Abstand voneinander beabstandet sind.

13. Zylindrische Batteriezelle, umfassend die Jelly-Roll (1) nach einem der Ansprüche 1 bis 12.

14. Batteriepack (3), umfassend mindestens eine zylindrische Batteriezelle nach Anspruch 13.

15. Fahrzeug (5), umfassend mindestens ein Batteriepack (3) nach Anspruch 14.

## Revendications

1. Roulé (1) ayant une structure dans laquelle un empilement qui inclut une première languette ayant une première languette d'électrode (10) avec une première polarité ; une deuxième électrode ayant une deuxième languette d'électrode avec une deuxième polarité ; et un séparateur interposé entre la première languette et la deuxième électrode, est enroulé dans une direction,
dans lequel la première languette d'électrode (10) a une pluralité de fentes (10a) formées le long d'une direction d'enroulement du roulé (1), et
**caractérisé en ce que**
une distance entre la pluralité de fentes (10a) augmente graduellement depuis un noyau (C) du roulé (1) vers une circonférence extérieure de celui-ci ; et
**en ce que** la première languette d'électrode (10) a une pluralité de parties courbées (10c) formées pour être espacées les unes des autres le long de la direction d'enroulement du roulé (1) et divisées par une pluralité de lignes de coupe (10b) formées à une profondeur prédéterminée d'une extrémité de la languette d'électrode.

2. Roulé (1) selon la revendication 1,
dans lequel la pluralité de fentes (10a) ont une forme s'étendant dans une direction parallèle à la direction d'enroulement.

3. Roulé selon la revendication 1 ou 2, dans lequel la pluralité de fentes sont formées sur la même ligne.

4. Roulé selon la revendication 1, dans lequel la pluralité de fentes (10a) sont formées sur une ligne droite parallèle à la direction d'enroulement de la première languette ou de la deuxième électrode.

5. Roulé (1) selon la revendication 1, dans lequel la longueur des fentes (10a) dans la direction d'enroulement est constante.

6. Roulé (1) selon l'une quelconque des revendications 1 à 3,
dans lequel les longueurs de la pluralité de fentes (10a) dans la direction d'enroulement augmentent graduellement depuis le noyau (C) du roulé (1) vers la circonférence extérieure de celui-ci.

7. Roulé (1) selon la revendication 1,
dans lequel parmi la pluralité de fentes (10a), les fentes (10a) adjacentes l'une à l'autre le long d'une direction radiale du roulé (1) se superposent au moins partiellement pour former un chemin d'imprégnation (IP) à travers lequel un électrolyte passe le long de la direction radiale.

8. Roulé (1) selon la revendication 6,
dans lequel le chemin d'imprégnation (IP) est formé dans une surface circonférentielle extérieure du roulé (1) à une profondeur prédéterminée le long de la direction radiale.

9. Roulé (1) selon la revendication 1,
dans lequel la pluralité de parties courbées (10c) sont courbées dans une direction vers un axe d'enroulement du roulé (1), et
dans lequel la pluralité de parties courbées (10c) couvrent au moins une partie d'une surface du roulé (1) perpendiculaire à l'axe d'enroulement.

10. Roulé (1) selon la revendication 1,
dans lequel la pluralité de parties courbées (10c) sont courbées dans une direction vers un axe d'enroulement du roulé (1), et
dans lequel la pluralité de parties courbées (10c) couvrent entièrement une surface du roulé (1) perpendiculaire à l'axe d'enroulement sauf le noyau (C).

11. Roulé (1) selon la revendication 9,
dans lequel le chemin d'imprégnation (IP) est formé sur une surface circonférentielle extérieure du roulé (1) à une profondeur prédéterminée le long de la direction radiale, et
dans lequel la profondeur (P) du chemin d'imprégnation (IP) est égale ou supérieure à une longueur radiale d'une zone couverte par la partie courbée (10c) dans une surface du roulé (1) perpendiculaire à l'axe d'enroulement.

12. Roulé (1) selon la revendication 1,
dans lequel les lignes de coupe (10b) et les fentes (10a) sont espacées les unes des autres d'une distance prédéterminée.

13. Élément de batterie cylindrique, comprenant le roulé (1) selon l'une quelconque des revendications 1 à 12.

14. Bloc-batterie (3), comprenant au moins un élément de batterie cylindrique selon la revendication 13.

15. Véhicule (5), comprenant au moins un bloc-batterie (3) selon la revendication 14.
